# EUROPÄISCHE PATENTSCHRIFT

(11) **EP 0 398 123 B1**
(45) Veröffentlichungstag und Bekanntmachung des Hinweises auf die Patenterteilung: **16.02.1994**
(21) Anmeldenummer: 90108584.5
(22) Anmeldetag: 07.05.1990
(51) Int. Cl.: A22B 7/00, A22B 5/00

(54) **Vorrichtung zum Reinigen von Fleischhaken in einer Reinigungseinrichtung**
Apparatus for cleaning meat hooks in a cleaning installation
Dispositif de nettoyage de crochet pour viande dans une installation de nettoyage

(30) Priorität: 18.05.1989 DE 3915993
(43) Veröffentlichungstag der Anmeldung: 22.11.1990
(73) Patentinhaber: HöCKER GMBH, D-49134 Wallenhorst (DE)
(72) Erfinder: Höcker, Burkhard, D-4500 Osnabrück (DE)
(74) Vertreter: Busse & Busse Patentanwälte

(56) Entgegenhaltungen:
- DE-U- 8 901 501
- FR-A- 1 215 466
- GB-A- 763 000
- SE-B- 460 454

## Beschreibung

Die Erfindung betrifft eine Vorrichtung zum Reinigen von Fleischhaken in einar Reinigungseinrichtung.

In der fleischverarbeitenden Industrie sind Fleischhaken als Transportmittel für die Aufhängung geschlachteter Tiere, die über ein geeignetes Bahnsystem hängend transportiert werden, im Einsatz. Der Einsatz des Fleischhakens beginnt unmittelbar nach der Tötung des Tieres und endet mit dem Beginn der Zerlegung oder Verarbeitung des Tieres. Gemäß einer weiträumig geübten Praxis wechseln diese Fleischhaken den Besitzer zwischen u.U. weit auseinanderliegenden geographischen Punkten, indem der Spediteur eines Fleischtransportes im Schlachtbetrieb, in dem eine Anzahl an Fleischhaken hängender Tierteile übernommen werden, eine dieser Anzahl entsprechende Anzahl von Leerhaken hinterläßt, um bei Ablieferung der Fleisch- bzw. Tierteile mit ihren Haken am Zielort vom Empfänger wiederum eine gleiche Anzahl von Leerhaken entgegenzunehmen. Durch die Aufnahme der Fleischteile mit den Fleischhaken im Abgabebetrieb und deren Ablieferung in der gleichen Form im Empfängerbetrieb ist es möglich, die Be- und Entladung der Fleischteile schneller, hygienischer und unter Vermeidung größerer Kühlverluste durchzuführen.

Problematisch ist jedoch in allen Fällen die Reinigung der Fleischhaken nach Abnahme des Fleisches bzw. der Tierteile, die im Interesse der Einhaltung hygienischer Bedingungen schnell und gründlich vorzunehmen ist. Das manuelle Sammeln, Herantransportieren und Beladen der üblicherweise zur Hakenreinigung Anwendung findenden Reinigungsvorrichtungen sowie Verschleißerscheinungen und Verschmutzungsprobleme stehen dabei häufig der Einhaltung dieser Bedingungen entgegen.

SE-B-460 454 beschreibt eine Vorrichtung zum Reinigen von Fleischhaken in einer Reinigungseinrichtung, bei der oberhalb von der ein mit einer Reinigungsflüssigkeit gefülltes Tauchbecken umfassenden Reinigungseinrichtung eine Absenkvorrichtung zum Absenken von Fleischhaken in das Tauchbecken der Reinigungseinrichtung angeordnet ist, die einen sich an die nach Durchführung eines Reinigungsvorgangs in ihre Normalstellung oberhalb der Reinigungseinrichtung zurückführende Absenkvorrichtung anschließenden Abführteil für die gereinigten Fleischhaken umfaßt. Bei der bekannten Vorrichtung handelt sich um einen Doppelförderer mit einer unteren Förderbahn für die Fleischhaken und einem oberen angetriebenen Kettenförderer mit von diesem herabhängenden Vorschubwerkzeugen, die mit den Fleischhaken in Mitnahmeeingriff bringbar sind, um sie entlang der unteren Förderbahn vorzuschieben. Die Absenkvorrichtung zum Absenken der Fleischhaken in das Tauchbecken und zu deren Zurückführen in die Normalstellung oberhalb der Reinigungseinrichtung ist dabei von entsprechend schräg in das Tauchbecken hinein- und aus diesem herausführenden Abschnitten des Doppelförderers gebildet, der sich in dem anschließenden Abführteil waagerecht fortsetzt.

Der Erfindung liegt die Aufgabe zugrunde, eine Vorrichtung zum Reinigen von Fleischhaken in einer Reinigungseinrichtung zu schaffen, mittels welcher Fleischhaken der angegebenen Art auf maschinellem Wege mit hoher Reinigungswirkung schnell und wirtschaftlich gereinigt werden können.

Ausgehend von der bekannten Vorrichtung gemäß SE-B-460 454 wird diese Aufgabe nach der Erfindung dadurch gelöst, daß die Reinigungseinrichtung mit einer Gefällegleitahn für einen selbsttätigen Transport der Fleischhaken zu dieser hin und von dieser fort versehen ist, die Gefällegleitbahn in ihrem der Reinigungsvorrichtung vorgeordneten Bereich eine Ladevorrichtung zur Aufnahme einer vorgegebenen Anzahl herantransportierter Fleischhaken umfaßt, die Absenkvorrichtung normalerweise mit senkrechtem Abstand oberhalb dar Reinigungseinrichtung innerhalb der Gefällegleitbahn angeordnet ist und der Abführteil als ein sich an die Absenkvorrichtung in deren Normalstellung oberhalb der Reinigungseinrichtung anschließender Ablaufteil dar Gafällegleitbahn ausgebildet ist.

Bei dieser Ausgestaltung werden die zu reinigenden leeren Fleischhaken auf der Gefällegleitbahn, vorzugsweise in einen der Ladevorrichtung vorauslaufenden Sammelteil, gesammelt, wobei an einer beliebigen geeigneten Stelle der Gefällegleitbahn bzw. des Sammelteils, der bei Platzmangel auch als Spirale ausgeführt sein kann, ein Sensor angebracht sein kann, der erst bei einer Ansammlung von zu reinigenden Fleischhaken bis zum Tastpunkt die Vorrichtung in Betrieb setzt. Damit wird gewährleistet, daß der Betrieb der Vorrichtung erst bei Ansammlung einer wirtschaftlich vertretbaren Anzahl verschmutzter Fleischhaken einsetzt. Es kann sodann innerhalb kurzer Zeit die vorgegebene Anzahl der herantransportierten Fleischhaken mittels der Absenkvorrichtung als Ganzes in das mit Reinigungsflüssigkeit gefüllte Tauchbecken der Reinigungseinrichtung abgesenkt werden, die vorzugsweise als Ultraschall-Reinigungsvorrichtung ausgebildet ist. Nach Durchführung des Reinigungsvorganges wird die Absenkvorrichtung wieder in ihre Normalstellung oberhalb der Reinigungseinrichtung verfahren, in der sie einen Teil der Gefällegleitbahn bildet, auf der sodann über den nachgeschalteten Ablaufteil die gereinigten Fleischhaken ohne Verzug und manuelles Eingreifen abgeführt werden können. Auf diese Weise ist mittels der erfindungsgemäßen Vorrichtung eine wirtschaftliche, schnelle Reinigung verschmutzter Fleischhaken mit hohem Reinigungsgrad möglich.

Weitere Merkmale und Vorteile der Erfindung ergeben sich aus den Ansprüchen und der nachstehenden Beschreibung in Verbindung mit der Zeichnung, in der ein Ausführungsbeispiel des Gegenstands der Erfindung in perspektivischen Darstellungen veranschaulicht ist. Es zeigen:
- Fig.1: einen Fleischhaken-Sammelteil einer Vorrichtung zum Reinigen verschmutzter Fleischhaken,
- Fig. 2: eine Fleischhaken-Ladevorrichtung in Verbindung mit einer Fleischhaken-Absenkvorrichtung der erfindungsgemäßen Reinigungsvorrichtung,
- Fig. 3: eine Darstellung der Fleischhaken-Absenkvorrichtung in Verbindung mit der Reinigungseinrichtung und
- Fig. 4: eine vereinfachte Gesamtdarstellung des oberen Bereichs der erfindinngsgemäßen Fleischhaken-Reinigungsvorrichtung.

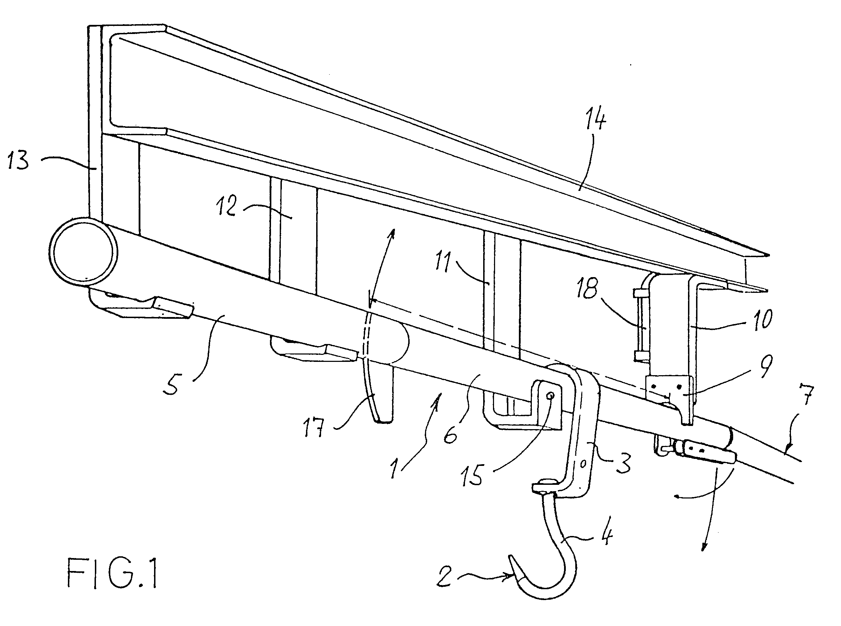

Wie sich aus Fig. 1 ergibt, umfaßt die dargestellte Vorrichtung zum Reinigen von Fleischhaken eine Gefällegleitbahn 1, die bei dem gezeigten Beispiel von einer Rohrbahn gebildet ist, an deren Stelle jedoch auch flache oder in sonstiger geeigneter Weise profilierte Gleitschienen treten können. Die einzelnen Rohrkörper der Gefällegleitbahn 1 sind an ihren aneinandergrenzenden Stirnseiten jeweils nach Art einer Nut-Feder-Verbindung unter Vermeidung von Stufen an den Übergängen aneinandergefügt, so daß Fleischhaken 2 aus Metall, die einen Transportbügel 3 und den eigentlichen Hakenteil 4 umfassen, störungsfrei auf der Oberseite der Gefällegleitbahn 1 unter der Schwerkraftwirkung entlanggleiten können.

Die einzelnen Rohrkörper der Gefällegleitbahn 1 bilden dabei einen Sammelteil 5, an den sich, in Transportrichtung der Fleischhaken 2 gesehen, eine Ladevorrichtung 6, eine Absenkvorrichtung 7 und ein Ablaufteil 8 für die Fleischhaken 2 anschließen.

Auf dem Sammelteil 5, der eine größere Länge als in der Zeichnung dargestellt aufweisen und insbesondere auch als Spirale ausgebildet sein kann, werden die zu reinigenden Fleischhaken 2 gesammelt, wobei sie in dem in Fig. 1 gezeigten Ladezustand der Vorrichtung vom Sammelteil 5 ungehindert auf die rohrförmige Ladevorrichtung 6 gelangen und bis zu einem Anschlag 9 gleiten können, der insoweit das Ende der Ladevorrichtung 6 markiert. Der Anschlag 9 ist von einer den oberen Bereich des Rohrkörpers der Ladevorrichtung 6 umgreifenden Anschlagplatte gebildet, die am unteren Ende einer Haltekonsole 10 befestigt ist. Die Haltekonsole 10 ist, ebenso wie weitere Haltekonsolen 11, 12 und 13 für die Ladevorrichtung 6 bzw. den Sammelteil 5, an einem waagerechten Träger 14 befestigt, der Teil eines Vorrichtungsgestelles oder in sonstiger Weise als ortsfeste Haltevorrichtung ausgebildet sein kann.

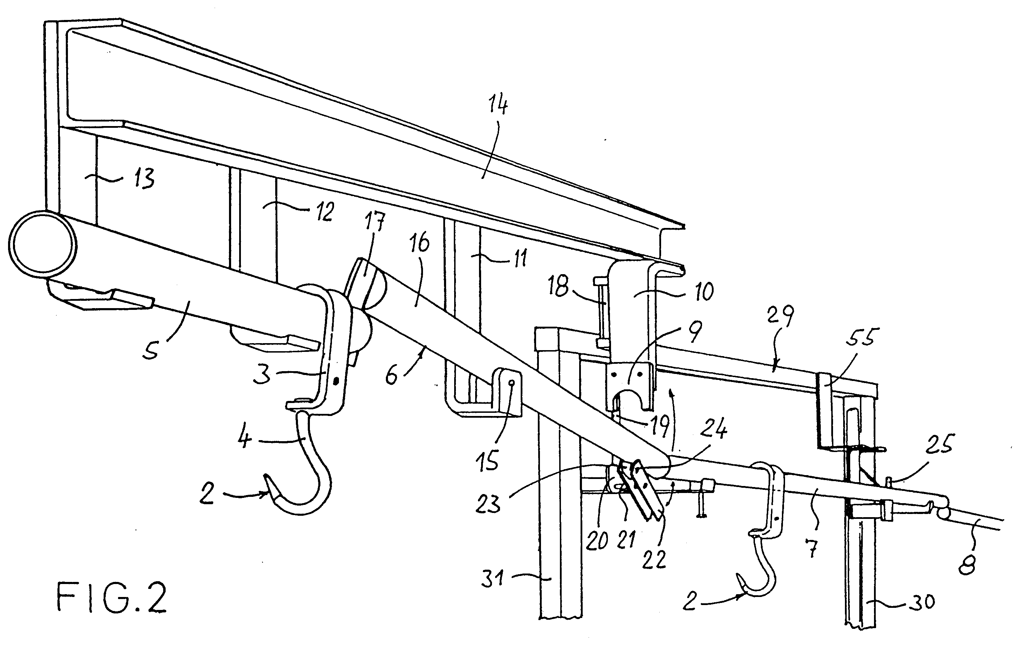

Wie insbesondere aus Fig. 2 ersichtlich ist, bildet der Rohrkörper der Ladevorrichtung 6 einen um eine horizontale Querachse 15 schwenkbaren Bahnteil 16. Die Schwenkachse 15 ist von einem sich durch den Rohrkörper hindurcherstreckenden Schwenkbolzen im unteren Lagerteil der Haltekonsole 11 gebildet. Das an den Sammelteil 5 angrenzende Ende des Bahnteils 16 ist als Nachlaufsperre 17 ausgebildet, indem der zum Anschluß an den Sammelteil 5 vorgesehene Federteil nach unten verlängert ist.

Sobald sich auf der Ladevorrichtung 6 im Bereich zwischen der Nachlaufsperre 17 und dem Hakenanschlag 9 eine vorgegebene Anzahl von Fleischhaken 2 angesammelt hat, wird über eine geeignete Steuerung mittels eines druckmittelbetätigten Arbeitszylinders 18 der Bahnteil 16 um die Querachse 15 aus der Stellung gemäß Fig. 1 in die Stellung gemäß Fig. 2 verschwenkt. Der Zylinder 18 ist schwenkbar am Träger 14 oder dgl. Halteteil befestigt, und seine Kolbenstange 19 umfaßt an ihrem unteren Ende einen Gabelkopf 20, an dem mittels eines Bolzens 21 ein zwei parallele Arme umfassender Kipphebel 22 gelenkig angebracht ist. An ihrem dem Bahnteil 16 zugewandten Ende sind die beiden Arme des Kipphebels 22 unter Aufnahme einer an dem Bahnteil 16 angeschweißten Verbindungslasche 23 und unter Ausbildung einer Schwenkachse 24 an den Rohrkörper bzw. Bahnteil 16 angelenkt.

In der ausgefahrenen Stellung der Kolbenstange 19 gemäß Fig. 2 ist durch die entsprechende Betätigung des Zylinders 18 der Bahnteil 16 in eine Abgabeposition zur Überführung der vorgegebenen Anzahl der Fleischhaken 2 auf die Absenkvorrichtung 7 überführt worden. Diese Abgabeposition ist gegenüber der Horizontalen stärker geneigt als die Hakenaufnahmeposition des Bahnteils 16 gemäß Fig. 1. Beispielsweise beträgt die Neigung in der Aufnahmeposition des Bahnteils 16 gemäß Fig. 1 übereinstimmend mit der Neigung des Sammelteils 5 etwa 20 %, während die Neigung in der Abgabeposition gemäß Fig. 2 etwa 40 % beträgt. In dieser Abgabeposition können die auf dem Bahnteil 16 befindlichen Fleischhaken 2 mit erhöhter Geschwindigkeit unter dem Hakenanschlag 9 durchlaufen und auf die Absenkvorrichtung 7 gelangen, wobei jeweils der erste Fleischhaken 2 der abgegebenen Hakenanzahl an einem Sperrbolzen 25 am dem Ablaufteil 8 zugewandten Endbereich der Absenkvorrichtung 7 zur Anlage und damit zum Stillstand kommt. Das Gefälle der Absenkvorrichtung 7 beträgt in dem Betriebszustand gemäß Fig. 2 etwa 10 %, was sich für eine ordnungsgemäße Aufnahme der von der Ladevorrichtung 6 abgegebenen Hakenmenge auf der Absenkvorrichtung 7 als zweckmäßig erwiesen hat. Während der Phase der Übergabe der Fleischhaken 2 von der Ladevorrichtung 6 an die Absenkvorrichtung 7 ist ein Nachrutschen weiterer Fleischhaken 2 auf den Bahnteil 16 durch die hochgeschwenkte Ablaufsperre 17 verhindert.

Nachdem die vorgegebene Anzahl von Fleischhaken 2 an die Absenkvorrichtung 7 übergeben worden ist, wird diese nach unten bewegt, um die Fleischhakan 2 in ein mit Reinigungsflüssigkeit gefülltes Tauchbecken 26 einer als Ganzes mit 27 bezeichneten Reinigungseinrichtung abzusenken. Hierzu ist die Absenkvorrichtung 7 mittels eines Rahmens 28 in einem Vorrichtungsgestell 29 vertikal auf- und abbeweglich abgestützt und geführt.

Das Vorrichtungsgestell 29 umfaßt zwei senkrechte Ständer 30 und 31 sowie eine diese überbrückende obere Traverse 32. In den einander zugewandten Innenseiten der Ständer 30 und 31 befindet sich je eine vertikale Führungsnut 32, in die jeweils ein senkrechtes Rahmenteil 33 des Rahmens 28 mit oberen und unteren Führungsrollen eingreift. Die Rollenachsen 34 der oberen Führungsrollen sind an ihren einander zugewandten Enden in einem mittleren Vierkant-Haltering 35 eingelassen, während die einander zugewandten Enden der Rollenachsen 36 der unteren Führungsrollen in einen Gabelkopf 37 am unteren Ende der Kolbenstange 38 eines druckmittelbetätigten Arbeitszylinders 39 eingesetzt sind. Der Zylinder 39 ist mit seinem oberen Ende an der Traverse 32 befestigt. Der Haltering 35 besitzt eine innere Öffnung, mit der er die Außenkontur des Zylinders 39 mit Spiel umgibt, derart, daß der gesamte Rahmen 28 bei einem Ausfahren der Kolbenstange 38 zum Eintauchen der Fleischhaken 2 in das Tauchbecken nach unten gefahren werden kann.

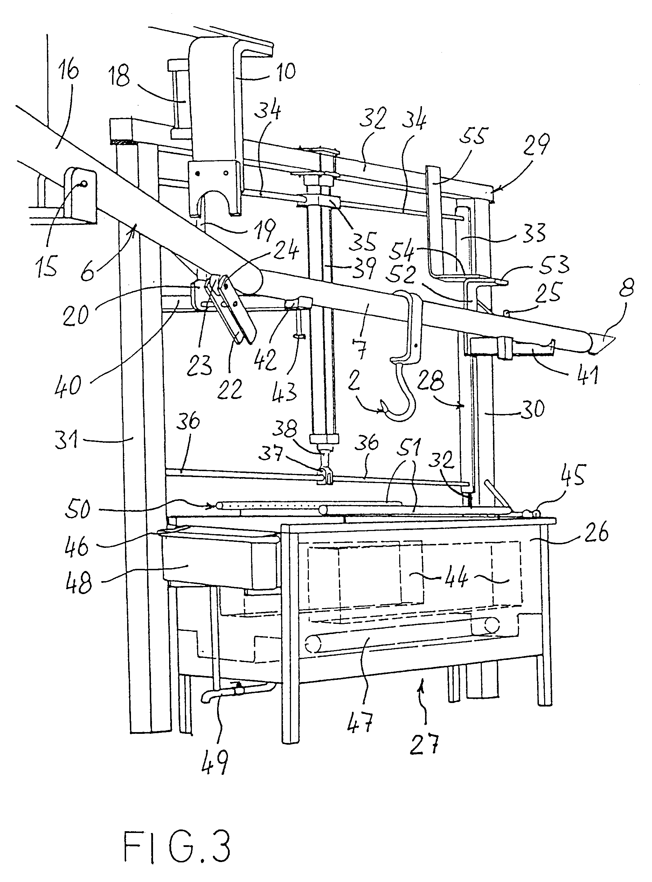

Zur Mitnahme der Absenkvorrichtung 7 durch den Rahmen 28 besitzt dieser von seinen seitlichen Rahmenteilen 33 ausgehende Haltekonsolen 40 und 41, auf denen die Absenkvorrichtung 7 in dem Betriebszustand gemäß Fig. 2 und 3 mit ihren beiden Rohrenden unterseitig aufgestützt ist. An ihrem der Ladevorrichtung 6 zugewandten Ende ist die Absenkvorrichtung 7 dabei an einem nach außen abgewinkelten Aufnahmeteil 42 der Konsole 40 durch einen an die Absenkvorrichtung 7 angeschweißten, den Aufnahmeteil 42 durchgreifenden Fangbolzen 43 unverlierbar gehalten, während das an den Ablaufteil 8 angrenzende Ende der Absenkvorrichtung 7 lose auf der entsprechend dem Gefälle gegenüber der Konsole 40 tieferliegenden, nach außen abgewinkelten Konsole 41 aufliegt.

Beim Absenken der Absenkvorrichtung 7 werden die zu reinigenden Fleischhaken 2 in das Tauchbecken 26 der Reinigungseinrichtung 27 eingetaucht, die mit zwei parallel angeordneten Schallschwingern 44 im Tauchbecken 26 als Ultraschall-Reinigungseinrichtung ausgebildet ist. Dabei wird das auf der Konsole 41 aufliegende Rohrende der Absenkvorrichtung 7 von einer Rohrauflage 45 der Reinigungseinrichtung 27 aufgenommen, wodurch das gegenüberliegende Rohrende der Absenkvorrichtung 7 noch etwas tiefer abgesenkt werden kann, damit die an der Absenkvorrichtung aufgehängten Fleischhaken 2 gleich tief in das Tauchbecken 26 eintauchen können. Zugleich werden dabei die zuvor wegen der Neigung der Absenkvorrichtung 7 gegenüber der Horizontalen aneinander anliegende Fleischhaken 2 bei der Bewegung in die Horizontale etwas beabstandet, so daß eine Reinigung auch in den Zwischenräumen zwischen benachbarten Fleischhaken 2 möglich ist.

Das Tauchbecken 26 ist bis zum Überlauf 46 mit einer dosierten Reinigungsflüssigkeit auf Wasserbasis gefüllt, die über eine thermostatgesteuerte Heizung 47 auf einer vorgewählten Temperatur gehalten wird, um ein optimales Reinigungsergebnis zu erzielen. Die beim Eintauchen der Fleischhaken 2 in das Tauchbecken 26 verdrängte Reinigungsflüssigkeit mit den gelösten und in dieser schwimmenden Schmutzpartikeln wird über den Überlauf 46, der die gesamte Beckenbreite einnimmt, in einen Filter 48 geführt. Die auf diese Weise gereinigte Reinigungsflüssigkeit gelangt über einen Ablauf 49 in den Schmutzwasserkanal des Gebäudes.

Nach der Ultraschallreinigung, die nur wenige Sekunden in Anspruch nimmt und z. B. etwa 15 sek. betragen kann, wird die Absenkvorrichtung 7 bzw. der diese aufnehmende Rahmen 28 durch Einfahren der Kolbenstange 38 des Zylinders 39 wieder in die Ausgangsposition gefahren. Die hierbei vorgesehene Steuerung der Bewegungsabläufe bewirkt zugleich die Betätigung einer Abbrausevorrichtung 50, die aus zwei parallelen Rohren 51 mit einander gegenüberliegenden Spritzöffnungen besteht und die gereinigten Fleischhaken 2 beim Herausziehen aus dem Tauchbecken 26 mit klarem Wasser abspült. Die aus dem Abspülvorgang der Fleischhaken 2 resultierende Wassermenge gelangt beim nachfolgenden Reinigungsvorgang in den überlauf 46, wodurch etwa aufschwimmender Schmutz abtransportiert wird. Eine nicht näher dargestellte Dosiereinrichtung für Reinigungskonzentrat sorgt für eine gleichbleibende Konzentration der Reinigungskraft im Tauchbecken 26.

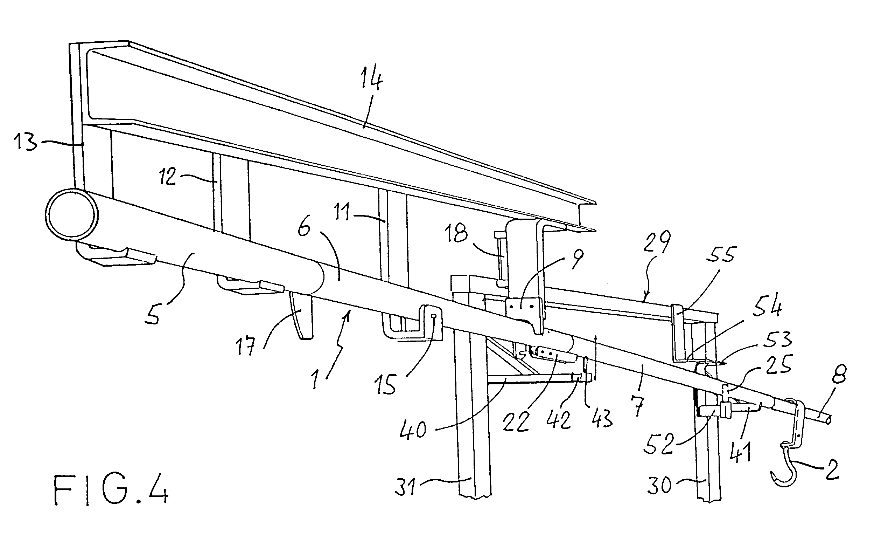

Nachdem die Absenkvorrichtung 7 mit den gereinigten Fleischhaken 2 durch Umsteuern des Zylinders 39 und Hochfahren des Halte-und Führungsrahmens 28 wieder die Normalstellung oberhalb der Reinigungseinrichtung 27 erreicht hat, wie sie etwa aus den Fig. 2 und 3 ersichtlich ist, wird der die Absenkvorrichtung 7 bildende Rohrkörper an seinem der Ladevorrichtung 6 zugewandten Ende mit Hilfe des Kipphebels 22 in eine Stellung angehoben, wie sie aus den Fig. 1 und 4 ersichtlich ist. Hierzu wird die Kolbenstange 19 des Zylinders 18 eingefahren, wobei sich der doppelarmige Kipphebel 22 von unten an die Rohrkörper der Ladevorrichtung 6 und der Absenkvorrichtung 7 in deren Übergangsbereich anlegt und diese bei der fortgesetzten Einfahrbewegung der Kolbenstange 19 um ein vorbestimmtes Maß in die aus den Fig. 1 und 4 ersichtliche Stellung anhebt. Dabei gelangt der schwenkbare Bahnteil 16 der Ladevorrichtung 6 durch Verschwenken um die Schwenkachse 15 in die ladebereite Position gemäß Fig. 1, während der Rohrkörper der Absenkvorrichtung 7 in diesem Übergangsbereich etwa um die Länge des Fangbolzens 43 von der Auflage 42 abgehoben wird, wie dies insbesondere aus Fig. 4 ersichtlich ist.

Der Sperrbolzen 25 wird durch eine Druckfeder im Inneren des Rohrkörpers der Absenkvorrichtung 7 normalerweise aus der Oberseite des Rohrkörpers heraus in seine Sperrstellung gedrückt, ist jedoch mit einem den Rohrkörper umgreifenden Verbindungsglied 52 versehen, das bei der Aufwärtsbewegung des Rohrkörpers der Absenkvorrichtung 7 mit einem oberen abgewinkelten Schenkel 53 an einem entsprechend abgewinkelten Schenkel 54 eines am Gestell 29 befestigten Niederhalters 55 zur Anlage kommt, wodurch der Sperrbolzen 25 entgegen der Kraft der ihn im Rohrinneren beaufschlagenden Druckfeder in das Rohrinnere der Absenkvorrichtung 7 gedrückt und in dieser einen Ablauf der gereinigten Fleischhaken 2 zulassenden Freigabestellung gehalten wird. Die gereinigten Fleischhaken 2 können in dieser angehobenen Stellung des Rohrkörpers der Absenkvorrichtung 7, in der dieser ein mit dem Gefälle des Sammelteils 5 und der Ladevorrichtung 6 übereinstimmendes, und damit gegenüber der absenkbereiten Position gemäß Fig. 2 und 3 vergrößertes Gefälle von etwa 20 % aufweist, mit entsprechender Beschleunigung auf den weiterführenden Ablaufteil 8 abgleiten, um in geeigneter Weise gesammelt bzw. verpackt und wieder verwendet zu werden.

Inzwischen konnte die in ihre ladebereite Stellung zurückgeführte Ladevorrichtung 6 erneut mit der vorbestimmten Anzahl zu reinigender Fleischhaken 2 in der eingangs beschriebenen Weise befüllt werden. Danach beginnt ein neues Arbeitsspiel durch Verschwenken des Bahnteils 16 der Ladevorrichtung 6 durch Ausfahren der Kolbenstange 19 des Zylinders 18, wobei wieder der Kipphebel 22 in seine aus den Fig. 2 und 3 ersichtliche Außereingriffsstellung mit den aneinandergrenzenden Rohrkörpern nach unten abgesenkt wird. Hierdurch wird ebenfalls das an die Ladevorrichtung 6 angrenzende Ende des Rohrkörpers der Absenkvorrichtung 7 nach unten abgesenkt und gelangt mit seiner Unterseite zur Abstützung auf der Auflage 42 der Haltekonsole 40. Gleichzeitig kommt mit dieser Absenkbewegung des Rohrkörpers der Absenkvorrichtung 7 das Verbindungsglied 52 des Sperrbolzens 25 vom Niederhalter 55 frei, so daß der Sperrbolzen 25 durch die Kraft der ihn beaufschlagenden Druckfeder im Rohrinneren wieder nach außen in seine aus den Fig. 2 und 3 ersichtliche Sperrstellung gedrückt wird, die einen Ablauf der Fleischhaken 2 verhindert.

Das beschriebene Arbeitsspiel kann so lange wiederholt werden, wie genügend zu reinigende Fleischhaken 2 herantransportiert werden, die die Ladevorrichtung 6 mit der vorgegebenen Anzahl füllen. Sofern der eingangs erwähnte Sensor keinen weiteren Zugang von Fleischhaken feststellt, sieht die entsprechende Vorrichtungssteuerung vor, daß der beschriebene Reinigungszyklus beendet wird.

## Patentansprüche

1. Vorrichtung zum Reinigen von Fleischhaken (2) in einer Reinigungseinrichtung (27), bei der oberhalb von der ein mit einer Reinigungsflüssigkeit gefülltes Tauchbecken (26) umfassenden Reinigungseinrichtung (27) eine Absenkvorrichtung (7) zum Absenken von Fleischhaken (2) in das Tauchbecken (26) der Reinigungseinrichtung (27) angeordnet ist, die einen sich an die nach Durchführung eines Reinigungsvorgangs in ihre Normalstellung oberhalb der Reinigungseinrichtung zurückführende Absenkvorrichtung (7) anschließenden Abführteil für die gereinigten Fleischhaken (2) umfaßt, dadurch gekennzeichnet, daß die Reinigungseinrichtung (27) mit einer Gefällegleitbahn (1) für einen selbsttätigen Transport der Fleischhaken (2)zu dieser hin und von dieser fort versehen ist, die Gefällegleitbahn (1) in ihrem der Reinigungseinrichtung (27) vorgeordneten Bereich eine Ladevorrichtung (6) zur Aufnahme einer vorgegebenen Anzahl herantransportierter Fleischhaken (2) umfaßt, die Absenkvorrichtung (7) normalerweise mit senkrechtem Abstand oberhalb der Reinigungseinrichtung (27) innerhalb der Gefällegleitbahn (1) angeordnet ist und der Abführteil als ein sich an die Absenkvorrichtung (7) in deren Normalstellung oberhalb der Reinigungseinrichtung (27) anschließender Ablaufteil (8) der Gefällegleitbahn (1) ausgebildet ist.

2. Vorrichtung nach Anspruch 1, dadurch gekennzeichnet, daß die Gefällegleitbahn (1) einen der Ladevorrichtung (6) vorauslaufenden Sammelteil (5) für herantransportierte Fleischhaken (2) umfaßt.

3. Vorrichtung nach Anspruch 1 oder 2, dadurch gekennzeichnet, daß die Ladevorrichtung (6) von einem um eine horizontale Querachse (15) schwenkbaren Bahnteil (16) gebildet ist, der aus seiner Hakenaufnahmeposition in eine gegenüber der Horizontalen stärker geneigte Abgabeposition zur Überführung der Fleischhaken (2) auf die Absenkvorrichtung (7) verschwenkbar ist.

4. Vorrichtung nach Anspruch 3, dadurch gekennzeichnet, daß der schwenkbare Bahnteil (16) in seiner Abgabeposition zugleich den Zulauf weiterer Fleischhaken (2) vom Sammelteil (5) der Gefällegleitbahn (1) sperrt.

5. Vorrichtung nach einem der Ansprüche 1 bis 4, dadurch gekennzeichnet, daß die Absenkvorrichtung (7) vertikal auf-und abbeweglich in einem Vorrichtungsgestell (29) abgestützt und geführt ist.

6. Vorrichtung nach einem der Ansprüche 1 bis 5, dadurch gekennzeichnet, daß die Absenkvorrichtung (7) in ihrem an dem Ablaufteil (8) angrenzenden Endbereich mit einem Anschlagorgan (25) versehen ist, das aus einer den Ablauf der Fleischhaken (2) verhindernden Sperrstellung in eine diesen zulassende Freigabestellung überführbar und in dieser festsetzbar ist.

7. Vorrichtung nach einem der Ansprüche 1 bis 6, dadurch gekennzeichnet, daß die Reinigungseinrichtung (27) als Ultraschall-Reinigungsvorrichtung ausgebildet ist.

## Claims

1. An apparatus for cleaning meat hooks (2) in a cleaning installation (27) in which there is above the cleaning installation (27) which comprises a dipping tank (26) filled with a cleaning fluid, a lowering device (7) for lowering meat hooks (2) into the dipping tank (26) of the cleaning installation (27) and which comprises adjacent the lowering device (7) which returns to its neutral position above the cleaning installation after a cleaning operation has been performed, an arrangement for removing the cleaned meat hooks (2), characterised in that the cleaning installation (27) is provided with an inclined track (1) for automatic transport of the meat hooks (2) to and away from the installation, the inclined track (1) having in its portion preceding the cleaning installation (27) a loading means (6) to accommodate a given number of fed-in meat hooks (2), the lowering device (7) is normally disposed at a vertical distance above the cleaning installation (27) and within the inclined track (1) while the removal means is constructed as a run-off part (8) of the inclined track (1) which is adjacent the lowering device (7) in the normal position of this latter above the cleaning installation (27).

2. An apparatus according to Claim 1, characterised in that the inclined track (1) comprises, preceding the loading device (6), a collecting means (5) for fed-in meat hooks (2).

3. An apparatus according to Claim 1 or 2, characterised in that the loading device (6) is constituted by a track part (16) adapted to pivot about a horizontal transverse axis (15) and which can be pivoted out of its hook-receiving position into a transfer position which is more sharply inclined in respect of the horizontal, in order to transfer the meat hooks (2) to the lowering device (7).

4. An apparatus according to Claim 3, characterised in that when it is in its transfer position the pivotable track part (16) also blocks the access for further meat hooks (2) from the collecting means (5) of the inclined track (1).

5. An apparatus according to one of Claims 1 to 4, characterised in that the lowering device (7) is supported and guided for vertical upwards and downwards movement in a frame (29).

6. An apparatus according to one of Claims 1 to 5, characterised in that the lowering device (7) is in its end portion adjacent the run-off part (8) is provided with an abutment member (25) which can be moved from a blocking position which prevents the removal of meat hooks (2) and into a released position which allows such removal, in which position it can be locked.

7. An apparatus according to one of Claims 1 to 6, characterised in that the cleaning installation (27) is constructed as an ultrasonic cleaning apparatus.

## Revendications

1. Installation pour le nettoyage de crochets de boucherie (2) dans un appareil de nettoyage (27) dans lequel, au-dessus de l'appareil de nettoyage (27) comportant une auge de trempage (26) remplie d'un liquide de nettoyage, est monté un dispositif d'abaissement (7) pour faire descendre les crochets de boucherie (2) dans l'auge de trempage (26) de l'appareil de nettoyage (27), qui comprend une partie d'évacuation pour les crochets de boucherie (2) nettoyés qui se raccorde au dispositif d'abaissement (7) qui, au terme d'une opération de nettoyage, revient dans sa position normale située au-dessus de l'appareil de nettoyage, caractérisée en ce que l'appareil de nettoyage (27) est pourvu d'un guide en pente (1) pour le transport automatique des crochets de boucherie (2) vers ledit appareil de nettoyage et depuis celui-ci, le guide en pente (1) comprend, dans sa zone située en amont de l'appareil de nettoyage (27), un dispositif de chargement (6) destiné à recevoir un nombre prédéterminé de crochets de boucherie acheminés dans cet endroit, le dispositif d'abaissement (7) est inséré dans le guide en pente (1), normalement a une certaine distance verticale au-dessus de l'appareil de nettoyage (27) et la partie d'évacuation a la forme d'une partie terminale (8) du guide en pente (1) qui se raccorde au dispositif d'abaissement (7) dans la position normale de ce dernier au-dessus de l'appareil de nettoyage (27).

2. Installation suivant la revendication 1, caractérisée en ce que le guide en pente (1) comprend une partie de rassemblement (5) pour les crochets de boucherie (2) acheminés en cet endroit, qui est disposée en amont du dispositif de chargement (6).

3. Installation suivant la revendication 1 ou 2, caractérisée en ce que le dispositif de chargement (6) est formé par une partie de guide (16) montée à pivotement autour d'un axe transversal horizontal (15), cette partie pouvant pivoter à partir de sa position de réception des crochets vers une position de livraison davantage inclinée par rapport à l'horizontale pour transférer les crochets de boucherie (2) sur le dispositif d'abaissement (7).

4. Installation suivant la revendication 3, caractérisée en ce que, dans sa position de livraison, la partie de guide pivotante (16) bloque en même temps l'arrivée d'autres crochets de boucherie (2) en provenance de la partie de rassemblement (5) du guide en pente (1).

5. Installation suivant l'une quelconque des revendications 1 à 4, caractérisée en ce que le dispositif d'abaissement (7) est monté et guidé dans un bâti (29) de l'installation de manière à pouvoir se déplacer verticalement dans un sens et dans l'autre.

6. Installation suivant l'une quelconque des revendications 1 à 5, caractérisée en ce que le dispositif d'abaissement (7) est pourvu, dans sa zone d'extrémité adjacente à la partie terminale (8), d'un organe de butée (25) qui peut être déplacé d'une position de blocage empêchant l'évacuation des crochets de boucherie (2) vers une position de libération autorisant cette évacuation et peut être immobilisé dans cette dernière position.

7. Installation suivant l'une quelconque des revendications 1 à 6, caractérisée en ce que l'appareil de nettoyage (27) a la forme d'un appareil de nettoyage à ultrasons.
